# EUROPÄISCHE PATENTSCHRIFT

(11) **EP 1 504 256 B1**
(45) Veröffentlichungstag und Bekanntmachung des Hinweises auf die Patenterteilung: **20.06.2007**
(21) Anmeldenummer: 03718745.7
(22) Anmeldetag: 10.04.2003
(51) Int. Cl.: G01N 29/02

(54) **SENSOR AUF DER BASIS VON OBERFLACHENWELLEN-BAUELEMENTEN MIT KAPAZITIVER KOPPLUNG DER HOCHFREQUENZANSCHLÜSSE**
SENSOR BASED ON SURFACE WAVE COMPONENTS WITH CAPACITIVE COUPLING OF THE HIGH FREQUENCY CONNECTIONS
DETECTEUR A BASE DE COMPOSANTS A ONDES DE SURFACE ET A COUPLAGE CAPACITIF DES CONNEXIONS HAUTE FREQUENCE

(30) Priorität: 15.05.2002 DE 10222068
(43) Veröffentlichungstag der Anmeldung: 09.02.2005
(73) Patentinhaber: Forschungszentrum Karlsruhe GmbH, 76133 Karlsruhe (DE)
(72) Erfinder: RAPP,Michael, 69221 Eppelheim (DE); VOIGT, Achim, 76344 Eggenstein-Leopoldshafen (DE)
(74) Vertreter: Rückert, Friedrich
(86) Internationale Anmeldenummer: PCT/EP2003/003717
(87) Internationale Veröffentlichungsnummer: WO 2003/098206

(56) Entgegenhaltungen:
- WO-A-01/61336
- DE-A- 19 619 311
- FREUDENBERG J ET AL: "A SAW immunosensor for operation in liquid using a SiO2 protective layer" SENSORS AND ACTUATORS B, ELSEVIER SEQUOIA S.A., LAUSANNE, CH, Bd. 76, Nr. 1-3, 1. Juni 2001 (2001-06-01), Seiten 147-151, XP004241108 ISSN: 0925-4005 in der Anmeldung erwähnt
- PATENT ABSTRACTS OF JAPAN vol. 2000, no. 11, 3. Januar 2001 (2001-01-03) & JP 2000 223989 A (KYOCERA CORP), 11. August 2000 (2000-08-11)

## Beschreibung

Die Erfindung betrifft einen Sensor auf der Basis von Oberflächenwellen-Bauelementen nach dem Oberbegriff des Patentanspruchs 1, wie er aus der WO 01/61336 A bekannt ist.

Im Bereich der Sensorik werden Piezoelektrische Hochfrequenzbauteile wie Bulk Schwinger, Oberflächenwellen-Resonatoren, -Verzögerungsleitungen und -Filter auf Quarz oder keramischer Basis üblicherweise über Bond oder Schweissverbindungen elektrisch kontaktiert. Diese Bonddrähte liegen oft im medienführenden Bereichen des Sensors und erzeugen ein zusätzliches Sensorrauschen durch deren Vibration, Korrossion durch unterschiedliche Materialien an der Kontaktstelle, Platzbedarf durch Bondloops und Kontakte, und Signalveschleppungen durch benötigte Bauteil Fixierungskleber.

Aus R. Steindl et. Al.: SAW Delay Lines for Wirelessly Requestable Conventional Sensors, Proc. IEEE Ultrasonic Symposium sind SAW Bauelemente bekannt, die passiv über Transponder mit Antennen über e-lektromagnteische Wellen angesteuert werden.

Die WO 01/61336 A offenbart einen Sensor auf der Basis von Oberflächenwellen-Bauelementen, bestehend aus einem Gehäuse mit mindestens einem Oberflächenwellen-Bauelement, einem fluidsensitiven Bereich, Zu- und Ableitungen für die Hochfrequenzsignale, Koppelkondensatoren, deren kapazitive Koppelflächen zum einen an dem Oberflächenwellen-Bauelement und zum anderen diesen gegenüber am Gehäuse angebracht sind, mit deren Hilfe die Zu- und Ableitungen der Hochfrequenzsignale für das Oberflächenwellen-Bauelement erfolgt.

Aus J. Freudenberg et. al.: A SAW immunosensor for operating in liquid using a Si0₂ protective layer, Sensors and Actuators B 76 (2001) 147- 151 ist ein SAW Chip bekannt, der mithilfe einer Stromschleife über Induktion gekoppelt ist. Die Realisierung der Hochfrequenzkopplung über Antennenschleifen benötigt einen großen Platzbedarf auf der Sensorchip Oberfläche. Die Ankopplung muss mechanisch präzise plaziert werden um Einfügedämfungsänderungen bei wechselndem Antennenabstand zu kompensieren. Außerdem müssen Sender und Empfängerantennen Impedanz angepaßt werden, was zu zusatzlichen Bauteilen und Einfügedämfungsänderungen führt. Das Gesamtsignal ist durch den induktiven Anteil der Antennenkopplung stark delokalisiert. Durch das große Übersprechen können somit unterschiedliche Kopplungsstrukturen nicht räumlich dicht angeordnet werden.

Die DE 196 19 311 A1 offenbart einen Sensor mit einem Oberflächenwellen-Bauelement, Zu- und Ableitungen für die Hochfrequenzsignale, wobei die Zu- und Ableitungen für die Hochfrequenzsignale mittels einer Antenne erfolgen. Zur Impedanzanpassung wird eine Spule oder ein Kondensator entlang einer impedanzgeführten Leiterbahn so lange mechanisch verschoben und dann fixiert (z. B. verlötet), bis eine optimale Anpassung des Hochfrequenzfilters erreicht ist.

Aufgabe der Erfindung ist es, einen Sensor der eingangs genannten Art zur Verfügung zu stellen, der kompakt und einfach aufgebaut ist.

Gelöst wird diese Aufgabe durch die Merkmale des Patentanspruchs 1. Die Unteransprüche beschreiben vorteilhafte Ausgestaltungen der Erfindung.

Durch kapazitive Koppelflächen an dem Oberflächenwellen- Bauelement 1 (Sensor) und der Anschluss-Grundplatte (Leiterplatte) kann die Hochfrequenz kontaktlos übertragen werden. Die Sensoroberfläche kann insgesamt mit dünnen Schutz- oder Sensorschichten versehen werden, ohne dass ohmsch kontaktiert werden muss. Des weiteren kann der fluidführende Raum in der koppelnden Leiterplatte realisiert werden womit sich sehr geringe Probevolumina ergeben.

Auf dem Sensorchip werden kapazitive Koppelflächen ausgeführt die planparallel den entsprechenden Empfängerflächen auf der Leiterplatte gegenüberliegen. Der Abstand bzw. das Dielektrikum zwischen den Koppelflächen ist durch die Sensorbeschichtung bestimmt und liegt bei einigen 100 nm.

Durch die kapazitive Ankopplung kann das System erheblich kleiner aufgebaut werden, ohne dass ein Übersprechen innerhalb eines Sensorarraysauftritt.

In der Biosensorik ist es wichtig mit geringsten Proteinmengen Sensorrik zu betreiben um die Kosten pro Analyse gering zu halten.

Der wesentliche Vorteil des erfindungsgemäßen Sensors beruht auf einer Reduktion des Probevolumens und der Vermeidung typischer Klebematerialien zur Montage üblicher SAW Bauelemente und deren Abdichtung in einer Messzelle mit polymeren Materialien. Untersuchungen haben gezeigt, dass diese für Signalverschleppungen verantwortlich sind. Alle Forderungen sind effektiv nur umsetzbar, wenn die Hochfrequenz durch eine kapazitive Kopplung erfolgt.

Der Sensor hat folgende weitere Vorteile:
Kontaktloses Ankopplung des Sensors, Sensor kann mit beliebigen Isolatoren (Polymeren) als ganzes beschichtet werden,
Mechanische Stabilität, da der Sensor auf der Leiterplatte aufliegt, Möglichkeit der Fluidführung zwischen den kapazitiven Koppelflächen innerhalb der Leiterplatte,
es ist kein Fixierungskleber von gebondeten Bauteilen notwendig, Gute thermische Ankopplung an Leiterplatte,
viele Kopplungsflächen sind auf engstem Raum realisierbar.

Es wurde ein kapazitiv koppelnder Testadapter mit interner Gasführung für ein 433MHz SAW Gas Sensorarray entwickelt. Dabei wurde das Probe-volumen von 1300µl auf 60µl reduziert und durch Verzicht auf Montage-kleber eine wesentliche Steigerung der Signaldynamik erreicht.

Die Erfindung wird im Folgenden anhand eines Ausführungsbeispiels mit Hilfe der Figuren näher erläutert. Dabei zeigt die Fig. 1 schematisch einen Sensor mit Koppelkondensatoren und einer mittigen Resonatorstruktur. Die Fig. 2 zeigt eine Sensoranordnung in Schnitt Draufsicht und Seitenansicht. Die Figuren 3 und 4 zeigen die Anordnungen von 8 Sensoren auf einer Leiterplatte.

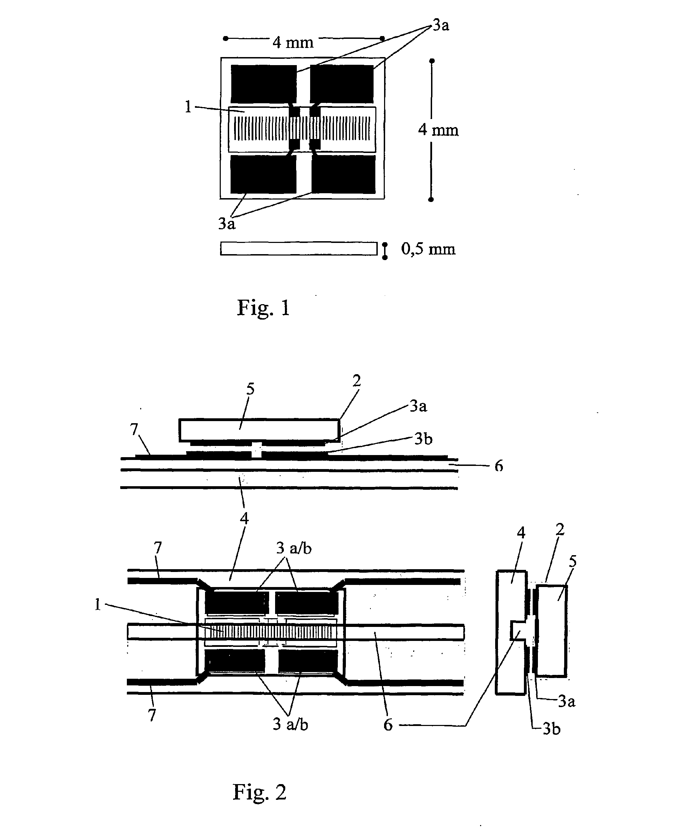

Die Fig 1 zeigt ein Oberflächenwellen- Bauelement 5 mit typischen beispielhaften Abmessungen mit 4 kapazitiven Koppelflächen 3a, mit einer mittigen Resonatorstruktur die zur Zu- und Ableitung der Hochfrequenzsignale mit diesen Koppelflächen 3a galvanisch verbunden sind. Diese Verbindungen sind im Detail nicht dargestellt..

Die Fig. 2 zeigt die Anordnung eines Sensors 5 auf der Grundplatte 4 mit Koppelflächen 3a, 3b, und Fluidkanal 6 in drei verschiedenen Ansichten. Die Grundplatte 4 enthält den Fluidkanal 6 und trägt die Leiterbahnen 7 mit den Koppelflächen 3b. Diesen gegenüber liegen die Koppelflächen 3a und der Sensor 5, wobei letztere von der Sensorbeschichtung umhüllt sind. Der mit der Grundplatte 4 gasdicht verklebte Rahmen, der die Sensoren 5 passgenau umschliesst und die Flächendichtung die den Rahmen nach oben abdichtet sind hier nicht dargestellt.

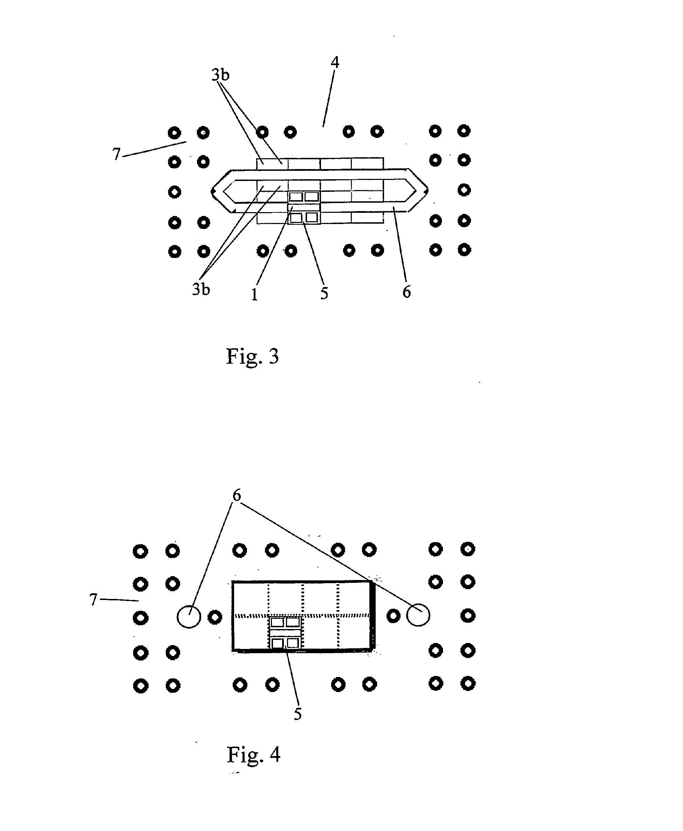

Die Fig. 3 zeigt die Oberseite einer Trägerplatine mit einer 1mm tiefen und 1,2mm breiten vergoldeten Gaskanal Fräsung, wobei der Gaskanal 6 zweiteilig symmetrisch ausgeführt ist. Von den hier möglichen acht Sensoren 5 ist nur einer dargestellt. Die Koppelflächen 3b für die Masseanbindung sind hier als gemeinsame Fläche ausgeführt.

Die Fig. 4 zeigt den auf die Trägerplatine 4 zu klebender Montagerahmen für 8 SAW Sensoren 5 mit passgenauer innerer Ausfräsung und Gas-Durchführungen.

Die 8 Sensoren werden mit der sensitiven Fläche nach unten in den gasdicht aufgeklebten Rahmen eingelegt und somit über Koppelflächen platziert.

Sie werden über eine elastische Verbunddichtung aus z. B. Nitril-Butadien-Kautschuk (NBR) und Teflon in den Rahmen hinein und auf die Koppelflächen 3b angepresst. Dadurch erhält man eine Abdichtung der Sensoren und einen definierten Anpressdruck an die Koppelflächen der das Spaltmaß reduziert.
- 1: SAW Resonatorstruktur
- 2: Sensorbeschichtung
- 3a: Kapazitive Koppelflächen auf Sensoroberfläche
- 3b: Kapazitive Koppelflächen auf Grundplatte
- 4: Grundplatte (Leiterplatte)
- 5: Oberflächenwellen- Bauelement (Sensor)
- 6: Fluidkanäle
- 7: Leiterbahnen auf Leiterplatte

## Patentansprüche

1. Sensor auf der Basis von Oberflächenwellen-Bauelementen, bestehend aus einem Gehäuse mit mindestens einem Oberflächenwellen-Bauelement, Zu- und Ableitungen für die Hochfrequenzsignale, Koppelkondensatoren, deren kapazitive Koppelflächen (3a, 3b) zum einen an dem Oberflächenwellen-Bauelement und zum anderen diesen gegenüber am Gehäuse angebracht sind, mit deren Hilfe die Zu- und Ableitungen der Hochfrequenzsignale für das Oberflächenwellen-Bauelement (5) erfolgt, **dadurch gekennzeichnet, dass** das Gehäuse aus einer Grundplatte (4) und einem Deckel besteht, wobei die Grundplatte (4) eine modifizierte Leiterplatte ist, die einen gasdicht mit ihr verbundenen Rahmen zur Aufnahme der Oberflächenwellen-Bauelemente trägt, die einen Fluidkanal (6) enthält und die eine Hälfte der Koppelkondensatoren trägt.

2. Sensor auf der Basis von Oberflächenwellen-Bauelementen nach Anspruch 1, **dadurch gekennzeichnet, dass** zwischen Deckel und Grundplatte (4) eine Flächendichtung angeordnet ist, wobei die Flächendichtung auf den Rahmen gepresst wird und die Oberflächenwellen-Bauelemente (5) fixiert.

3. Sensor auf der Basis von Oberflächenwellen-Bauelementen nach Anspruch 1 oder 2, **dadurch gekennzeichnet, dass** der Rahmen die Oberflächenwellen-Bauelemente (5) passgenau umschließt.

4. Sensor auf der Basis von Oberflächenwellen-Bauelementen nach einem der Ansprüche 1 bis 3, **dadurch gekennzeichnet, dass** das Gehäuse acht Oberflächenwellen-Bauelemente enthält, die in zwei Gruppen an einem verzweigten Fluidkanal (6) angeordnet sind.

## Claims

1. Sensor, based on surface wave components and comprising a housing having at least one surface wave component, supply lines and discharge lines for the high-frequency signals and coupling capacitors, the capacitive coupling faces (3a, 3b) of which are attached, on the one hand, to the surface wave component and, on the other hand, to the housing opposite said component, by means of which faces the supply and discharge of the high-frequency signals for the surface wave component (5) are effected, **characterised in that** the housing comprises a base plate (4) and a cover, the base plate (4) being a modified printed circuit board which carries a frame, connected to said board in a gas-tight manner, for accommodating the surface wave components, which board contains a fluid duct (6) and carries one half of the coupling capacitors.

2. Sensor based on surface wave components according to claim 1, **characterised in that** a surface seal is disposed between cover and base plate (4), the surface seal being pressed onto the frame and securing the surface wave components (5).

3. Sensor based on surface wave components according to claim 1 or 2, **characterised in that** the frame surrounds the surface wave components (5) with an accurate fitting.

4. Sensor based on surface wave components according to one of claims 1 to 3, **characterised in that** the housing contains eight surface wave components, which are disposed in two groups on a branched fluid duct (6).

## Revendications

1. Détecteur à base de composants à ondes de surface, constitué d'un boîtier comportant au moins un composant à ondes de surface, des dispositifs d'amenée et de dérivation pour les signaux haute fréquence, des condensateurs de couplage, dont les surfaces de couplage capacitives (3a, 3b) placées d'une part sur le composant à ondes de surface et, d'autre part en face de celles-ci sur le boîtier, amènent et dérivent les signaux haute fréquence pour le composant à ondes de surface (5),
**caractérisé en ce que**
le boîtier est constitué d'une plaque de montage (4) et d'un couvercle, la plaque de montage (4) étant une carte imprimée modifiée qui porte un cadre relié à celle-ci de manière étanche aux gaz, destiné à recevoir les composants à ondes de surface, contient un canal à fluide (6) et porte une moitié des condensateurs de couplage.

2. Détecteur à base de composants à ondes de surface selon la revendication 1,
**caractérisé en ce qu'**
un joint plat disposé entre le couvercle et la plaque de montage (4), est pressé sur le cadre et fixe les composants à ondes de surface (5) immobilisés.

3. Détecteur à base de composants à ondes de surface selon la revendication 1 ou la revendication 2,
**caractérisé en ce que**
le cadre enserre avec précision les composants à ondes de surface (5).

4. Détecteur à base de composants à ondes de surface selon l'une quelconque des revendications 1 à 3,
**caractérisé en ce que**
le boîtier contient huit composants à ondes de surface répartis en deux groupes sur un canal à fluide (6) ramifié.
